(19) Europäisches Patentamt

European Patent Office

Office européen des brevets

(11) Veröffentlichungsnummer : **0 030 571**
**B1**

(12) **EUROPÄISCHE PATENTSCHRIFT**

(45) Veröffentlichungstag der Patentschrift :
**23.05.84**

(21) Anmeldenummer : **79105355.6**

(22) Anmeldetag : **22.12.79**

(51) Int. Cl.³ : **F 24 J   3/02**

(30) Priorität : **18.12.79 DE 7935590 U**

(43) Veröffentlichungstag der Anmeldung :
**24.06.81 Patentblatt 81/25**

(45) Bekanntmachung des Hinweises auf die Patenterteilung : **23.05.84 Patentblatt 84/21**

(84) Benannte Vertragsstaaten :
**AT BE CH DE FR GB IT LU NL SE**

(56) Entgegenhaltungen :
**AT-B-   348 722**
**DE-A- 2 508 339**
**DE-A- 2 542 989**
**DE-A- 2 558 612**
**DE-A- 2 617 452**
**DE-A- 2 623 862**
**DE-A- 2 639 354**
**FR-A- 2 295 373**
**US-A- 2 998 006**

(54) **Energiesammlerzelle.**

(73) Patentinhaber : **Eckinger, Heinz**
**Am Steending 81**
**D-2820 Bremen 71 (DE)**

(72) Erfinder : **Eckinger, Heinz**
**Am Steending 81**
**D-2820 Bremen 71 (DE)**

(74) Vertreter : **Bolte, Erich, Dipl.-Ing.**
**Hollerallee 73**
**D-2800 Bremen (DE)**

EP 0 030 571 B1

**Beschreibung**

Die Erfindung betrifft eine Energiesammlerzelle, bestehend aus einem Absorberhohlkörper mit einem Kanalsystem für ein Wärmetransportmittel im Innern und einer Strahlung aufnehmenden Absorptionsfläche, der in einem aus Oberteil und Unterteil bestehenden, evakuierten Gehäuse angeordnet ist, dessen Oberteil strahlungsdurchlässig ist.

Die bekannten mit Vakuum arbeitenden Energiesammler der vorgenannten Art (DE-A-2 639 354), die vornehmlich zum Absorbieren von Sonnenstrahlen, aber auch anderer Energiestrahlen dienen, besitzen zum Abfangen des erheblichen, auf den Absorberhohlkörper wirkenden Luftdruckes im Innern Stützsysteme. Diese werfen Schatten und setzen ganz allgemein den Wirkungsgrad herab.

Zur Ausbildung des Absorberhohlkörpers ist es bekannt, dessen Oberfläche, soweit sie zum Absorbieren von Sonnenstrahlen dient, mit Erhöhungen zu versehen (US-A-2 998 006). Die Absorptionsfläche dieses bekannten Absorberhohlkörpers weist mit Abstand voneinander liegende Erhöhungen auf, die über relativ steile Seitenflächen verfügen. Diese Absorptionsfläche weist mehrere Nachteile im Hinblick auf ihre Energieausbeute auf. Zum einen erhöhen die nur vereinzelt auf der Absorptionsfläche angeordneten Erhöhungen die tatsächlich von den Sonnenstrahlen getroffene Oberfläche nur unwesentlich, während zum anderen die Seitenwände der Erhöhungen aufgrund ihrer steilen Anordnung nur bei einer bestimmten Einfallsrichtung der Sonnenstrahlen ein günstiges Auftreffen derselben auf die Absorptionsfläche ermöglichen.

Der Erfindung liegt die Aufgabe zugrunde, die sie betreffenden Energiesammlerzellen weiterzuentwickeln und zu verbessern. Dies soll insbesondere in der Richtung geschehen, daß sie bei einfacher, kostengünstiger Herstellung einen wesentlich höheren Wirkungsgrad erzielen als die bekannten und außerdem trotz Fehlens von Stützsystemen dem auf sie einwirkenden Luftdruck ohne Deformierung standhalten können.

Die Erfindung ist gekennzeichnet durch die folgenden Merkmale :

a) Oberteil und Unterteil des Gehäuses sind allseits konvex gewölbt,

b) die Absorptionsfläche des Absorberhohlkörpers weist dreieckförmige Erhöhungen und Vertiefungen auf, deren Seitenflächen im Querschnitt gleich lang sind und zwischen sich einen Winkel von etwa 60° einschliessen, und

c) die Absorptionsfläche und Unterfläche des Absorberhohlkörpers sind längs mindestens einer im schrägen oder rechten Winkel zu den parallelen Erhöhungen und Vertiefungen der Absorptionsfläche verlaufenden Linie punktförmig miteinander verbunden.

Durch die vorgenannten Merkmale wird es erstmals ermöglicht, eine unter Vakuum stehende Energiesammlerzelle mit einem hohen Wirkungsgrad kostengünstig herzustellen. Obgleich für den Absorberhohlkörper nur relativ wenig Material benötigt wird und ferner ein Stützsystem nicht erforderlich ist, ist die erfindungsgemäße Energiesammlerzelle so stabil, daß sie dem erheblichen, auf sie von außen einwirkenden Luftdruck ohne Deformierung standhält. Dadurch, daß die Seitenflächen der Erhöhungen und Vertiefungen zur Vergrößerung der Absorptionsfläche des Absorberhohlkörpers im Querschnitt gleich lang sind und zwischen sich einen Winkel von etwa 60° einschließen, wird ein besonders günstiger und wirksamer Einstrahlungswinkel der Energiestrahlen zum Absorberhohlkörper erzielt.

Dadurch, daß die Absorptions- und Unterfläche des Absorberhohlkörpers längs einer Linie, die in einem rechten Winkel oder auch einem schrägen Winkel zu parallelen Erhöhungen und Vertiefungen der Absorptionsfläche verläuft, miteinander verbunden sind, wird sichergestellt, daß der Absorberhohlkörper durch das Vakuum nicht deformiert wird, obgleich er kein Stützsystem hat.

Dadurch, daß das Ober- und Unterteil des Gehäuses allseits konvex gewölbt ausgebildet ist, wird erreicht, daß dieses dem von außen einwirkenden Luftdruck ohne Deformierung standhält.

Nach einem weiteren Vorschlag der Erfindung sind die Erhöhungen als Hohlrippen ausgebildet. Hierdurch wird der Vorteil erzielt, daß das Wärmetransportmittel — es handelt sich in der Regel um Wasser, dem Schutzmittel zugesetzt sein können —, welches durch das Innere des Absorberhohlkörpers geführt wird, unmittelbar an alle Teile, also auch an die Seitenflächen der Erhöhungen bzw. Rippen seiner Absorptionsfläche herangeführt wird und dort die absorbierte Energie aufnehmen und abtransportieren kann.

Ferner ist ein Vorschlag der Erfindung von Vorteil, wonach eine Vielzahl von Energiesammlerzellen zu einem größeren Bauelement vereinigt sind. Hierdurch ist es möglich, daß auch bei relativ klein gehaltenen einzelnen Energiesammlerzellen diese in einfacher Weise vor Ort großflächig verlegt werden können. Die Energiesammlerzellen können dabei mit ihrem Wärmetransportmittelsystem und Evakuierungssystem je nach Wunsch parallel oder hintereinander geschaltet werden.

Die Erfindung kann in verschiedener Weise ausgeführt werden. In der Zeichnung ist ein Ausführungsbeispiel dargestellt, und zwar zeigt :

Figur 1 eine Energiesammlerzelle in perspektivischer Ansicht,

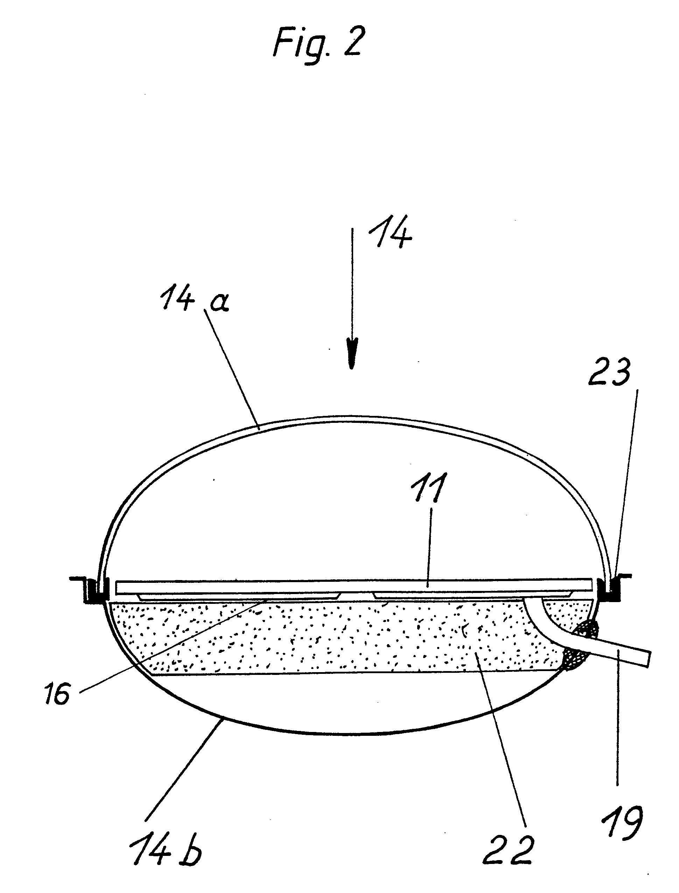

Figur 2 eine Energiesammlerzelle gemäß Fig. 1 im Seitenschnitt,

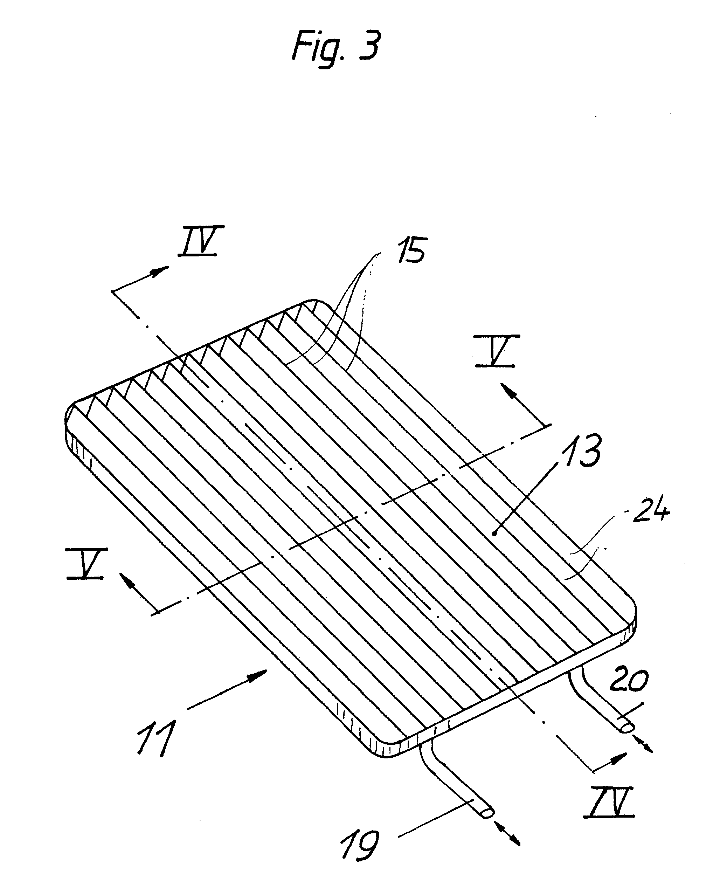

Figur 3 einen Absorberhohlkörper in perspektivischer Darstellung,

Figur 4 einen Längsschnitt zu Fig. 3 nach

Linie IV-IV,

Figur 5 einen Querschnitt zu Fig. 3 nach Linie V-V,

Figur 6 eine Einzelheit VI gemäß der Fig. 5 in vergrößertem Maßstab,

Figur 7 eine Unteransicht eines Absorberhohlkörpers in perspektivischer Darstellung, und

Figur 8 die Vereinigung von drei Energiesammlerzellen zu einem größeren Bauelement in perspektivischer Darstellung.

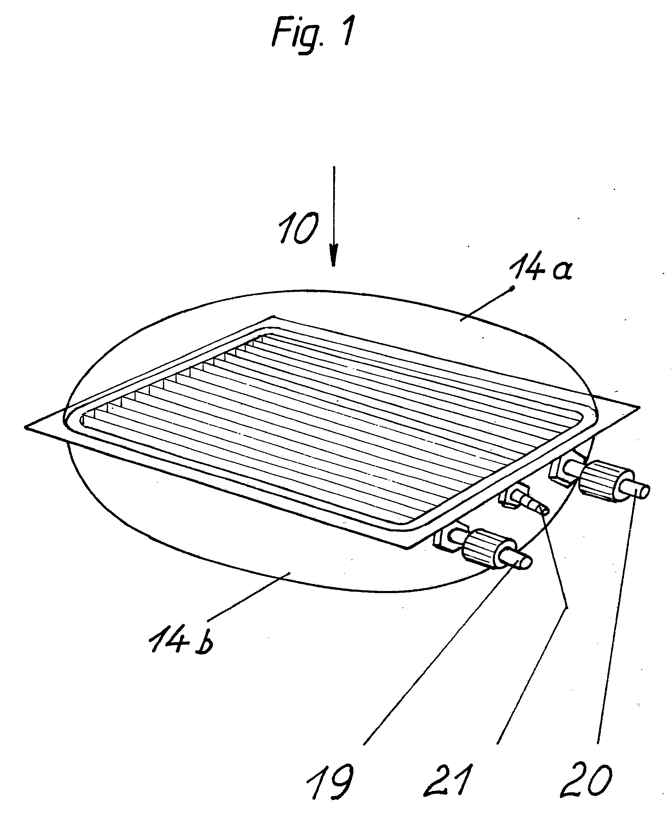

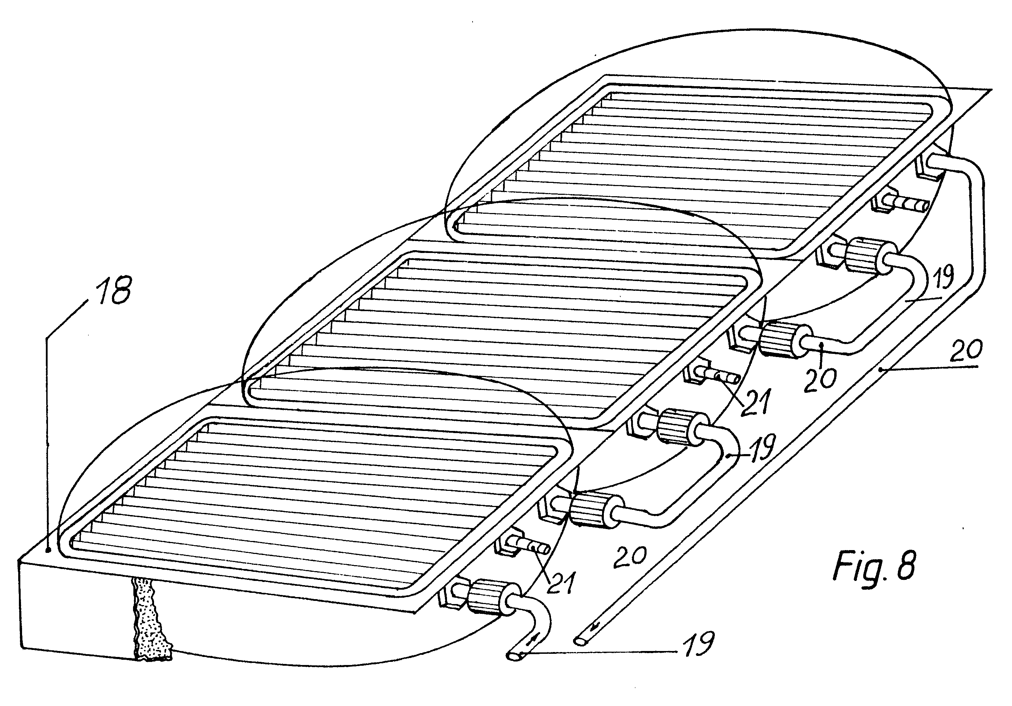

Die Energiesammlerzelle 10 besteht aus einem Absorberhohlkörper 11. Dieser besitzt im Innern ein Kanalsystem 12 für ein Wärmetransportmittel. Der Absorberhohlkörper 11 besteht seinerseits aus einer Strahlung aufnehmenden Absorptionsfläche 13 und einer Unterfläche 16, die zwischen sich einen Hohlraum bilden. Diesem wird das Wärmetransportmittel über eine Leitung 19 zu- und eine Leitung 20 abgeführt. Der Absorberhohlkörper 11 ist in einem evakuierten Gehäuse 14 angeordnet, das aus einem Oberteil 14a und Unterteil 14b besteht. Das Oberteil 14a ist strahlungsdurchlässig. Das Oberteil 14a und Unterteil 14b des Gehäuses 14 sind allseits konvex gewölbt (siehe Fig. 1 und 8). Das Gehäuse 14 ist über eine Leitung 21 evakuierbar.

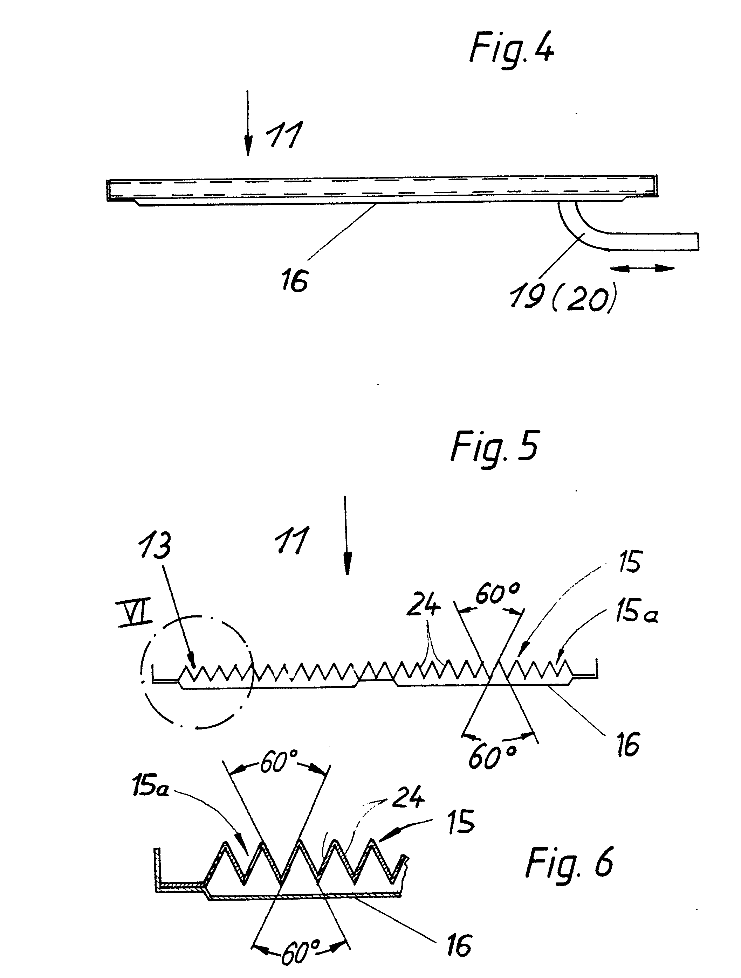

Die Absorptionsfläche 13 des Absorberhohlkörpers 11 ist mit Erhöhungen 15 bzw. Vertiefungen 15a ausgestattet. Diese werden mit Vorteil als Hohlrippen ausgebildet (Fig. 5). Die Seitenflächen 24 der Erhöhungen 15 bzw. Rippen sind im Querschnitt gleich lang und schließen zwischen sich einen Winkel von etwa 60° ein.

Im Gehäuse 14 ist unterhalb des Absorberhohlkörpers 11 eine Wärmeisolierung 22 vorgesehen. Zwischen Oberteil 14a und Unterteil 14b des Gehäuses 14 ist eine Luftdichtung 23 angeordnet.

Die Absorptionsfläche 13 und Unterfläche 16 des Absorberhohlkörpers 11 sind sind miteinander punktförmig verbunden.

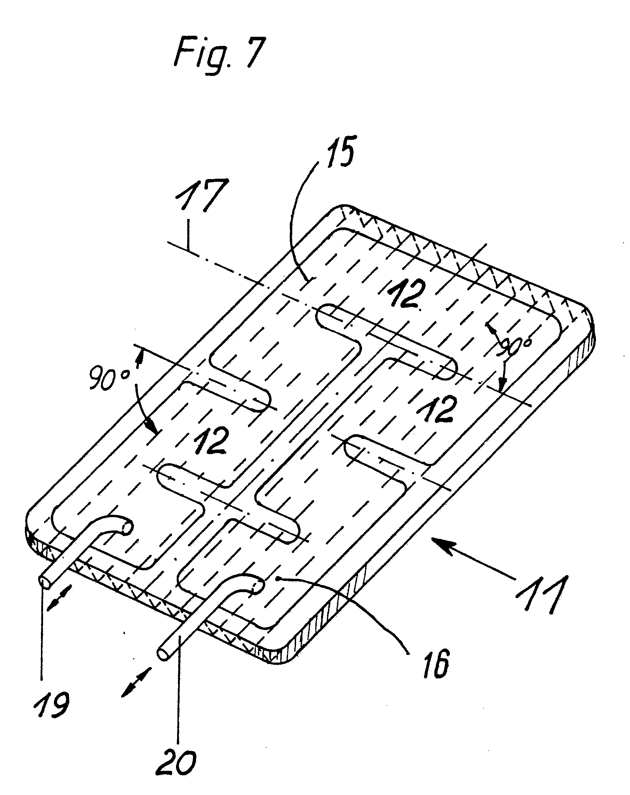

Die einzelnen Verbindungslinien 17 verlaufen, wie in Fig. 7 dargestellt, in einem rechten Winkel zu den parallelen Erhöhungen 15 und Vertiefungen 15a der Absorptionsfläche 13. Sie können auch in einem Schrägen Winkel zu den Erhöhungen 15 bzw. Vertiefungen 15a verlaufen.

Wie aus Fig. 8 hervorgeht, kann mit Vorteil eine Vielzahl von Zellen 10 zu einem größeren Bauelement 18 vereinigt werden, sei es durch Hintereinanderschließen, wie in Fig. 8 dargestellt, sei es durch Parallelschließen von Luftzuführungsleitungen 19 und Abführungsleitungen 20 sowie Evakuierungsleitungen 21.

**Ansprüche**

1. Energiesammlerzelle (10), bestehend aus einem Absorberhohlkörper (11) mit einem Kanalsystem (12) für ein Wärmetransportmittel im Innern und einer Strahlung aufnehmenden Absorptionsfläche (13), der in einem aus Oberteil (14a) und Unterteil (14b) bestehenden, evakuierten Gehäuse (14) angeordnet ist, dessen Oberteil (14a) strahlungsdurchlässig ist, gekennzeichnet durch folgende Merkmale :

a) Oberteil (14a) und Unterteil (14b) des Gehäuses (14) sind allseits konvex gewölbt (Fig. 1, 2, 8) ;

b) die Absorptionsfläche (13) des Absorberhohlkörpers (11) weist dreieckförmige Erhöhungen (15) und Vertiefungen (15a) auf, deren Seitenflächen (24) im Querschnitt gleich lang sind und zwischen sich einen Winkel von etwa 60° einschließen (Fig. 3 und 5), und

c) die Absorptionsfläche (13) und Unterfläche (16) des Absorberhohlkörpers (11) sind längs mindestens einer im schrägen oder rechten Winkel zu den parallelen Erhöhungen (15) und Vertiefungen (15a) der Absorptionsfläche (13) verlaufenden Linie (17) punktförmig miteinander verbunden (Fig. 7).

2. Energiesammlerzelle nach Anspruch 1, dadurch gekennzeichnet, daß als Erhöhungen (15) Hohlrippen dienen (Fig. 5).

3. Sonnenenergiekollektor, dadurch gekennzeichnet, daß eine Vielzahl von Energiesammlerzellen (10) nach Anspruch 1 oder 2 zu einem größeren Bauelement (18) vereinigt sind (Fig. 8).

**Claims**

1. Energy collector cell (10) comprising an absorber cavity (11) with a duct system (12) for a heat transfer medium in the interior and a radiation-receiving absorption surface (13) arranged in an evacuated casing (14) comprising an upper part (14a) and a lower part (14b), the upper part (14a) being radiation-permeable, characterized by the following features :

a) the upper part (14a) and lower part (14b) of the casing (14) are convexly curved on all sides (Figs 1, 2 and 8) ;

b) the absorption surface (13) of absorber cavity (11) has triangular protuberances (15) and depressions (15a), whose lateral faces (24) are cross-sectionally of the same length and form an angle between them of approximately 60° (Figs 3 and 5) ; and

c) the absorption surface (13) and lower surface (16) of absorber cavity (11) are interconnected in punctiform manner along at least one line (17) which is at an oblique or right angle to the parallel protuberances (15) and depressions (15a) of absorption surface (13) (Fig. 7).

2. Energy collector cell according to claim 1, characterized in that hollow ribs are used as the protuberances (15) (Fig 5).

3. Solar cell, characterized in that a plurality of energy collector cells (10) according to claims 1 or 2 are combined into a larger assembly (18) (Fig 8).

**Revendications**

1. Cellule collectrice d'énergie (10) constituée d'un corps creux absorbant (11) muni à l'intérieur d'un réseau de conduits (12) pour fluide caloporteur et une surface d'absorption (13) recevant le rayonnement, corps qui est placé dans une enveloppe (14) mise sous vide, constituée d'une partie supérieure (14a) et d'une partie inférieure (14b), la partie supérieure (14a) étant perméable au rayonnement, caractérisée par le fait que :

a) la partie supérieure (14a) et la partie inférieure (14b) de l'enveloppe (14) sont convexes de toutes parts (fig. 1, 2, 8),

b) la surface d'absorption (13) du corps creux absorbant (11) présente des élévations (15) et des creux (15a) triangulaires dont les faces latérales (24) ont en coupe transversale la même longueur et font entre elles un angle d'environ 60° (fig. 3 et 5), et

c) la surface d'absorption (13) et la surface inférieure (16) du corps creux absorbant (11) sont assemblées par points le long d'au moins une ligne (17) qui fait un angle aigu ou droit avec les élévations (15) et creux (15a) parallèles de la surface d'absorption (13) (fig. 7).

2. Cellule collectrice d'énergie selon la revendication 1, caractérisée par le fait que les élévations (15) sont formées par des nervures creuses (fig. 5).

3. Collecteur d'énergie solaire, caractérisé par le fait qu'une pluralité de cellules collectrices d'énergie (10) selon l'une des revendications 1 et 2 sont réunies pour former un élément plus grand (18) (fig. 8).

# Fig. 1

## Fig. 2

# Fig. 3

Fig. 4

11

16

19 (20)

Fig. 5

13

11

VI

24

60°

15

15a

16

60°

60°

15a

60°

15

24

Fig. 6

60°

16

# Fig. 7

Fig. 8

0 030 571